# EUROPÄISCHE PATENTSCHRIFT

(11) **EP 2 002 914 B1**
(45) Veröffentlichungstag und Bekanntmachung des Hinweises auf die Patenterteilung: **13.07.2011**
(21) Anmeldenummer: 08103975.2
(22) Anmeldetag: 15.05.2008
(51) Int. Cl.: B23D 57/00, B28D 1/08

(54) **Schutzeinrichtung für eine Seilsägevorrichtung**
Protective device for a wire saw device
Dispositif de protection pour un dispositif de scie à fil

(30) Priorität: 14.06.2007 DE 102007000330
(43) Veröffentlichungstag der Anmeldung: 17.12.2008
(73) Patentinhaber: HILTI Aktiengesellschaft, 9494 Schaan (LI)
(72) Erfinder: Rieger, Hans-Jörg, 6712 Thüringen (AT); Plattner, Josef, 6200 Gallzein (AT)
(74) Vertreter: Wildi, Roland

(56) Entgegenhaltungen:
- WO-A-96/33058
- DE-A1-102004 012 606

## Beschreibung

Die Erfindung betrifft eine Schutzeinrichtung für eine Seilsägevorrichtung mit zumindest zwei teleskopartig zusammenschiebbaren Abdeckelementen, die jeweils einen sich entlang einer Längsachse erstreckenden Aufnahmeraum für das Sägeseil sowie jeweils einen sich entlang der axialen Längserstreckung erstreckenden Öffnungsspalt aufweisen.

Seilsägevorrichtungen dienen insbesondere dem Sägen von grossen Werkstücken, wie z. B. von Steinblöcken, wobei das Sägeseil Schneidkörper, wie beispielsweise gesinterte Diamantperlen, aufweist und von einer Motoranordnung der Seilsägevorrichtung angetrieben wird. Mittels Umlenkrollen wird das Sägeseil um das zu schneidende Werkstück geführt, wobei die Umlenkrollen je nach Ausrichtung des zu erstellenden Schnitts ausgerichtet sind. Aufgrund der Art der Beanspruchung des Sägeseils kann plötzlich ein Seilriss auftreten und das gerissene Sägeseil peitschenartig durch die Luft schnellen.

Aus der DE 10 2004 012 606 A1 ist eine nachträglich an einer Seilsägevorrichtung anordnenbaren Schutzeinrichtung als Schutz vor einem gerissenen Sägeseil mit zwei teleskopartig zusammenschiebbaren, U-förmigen Abdeckelementen bekannt, die jeweils einen sich entlang einer Längsachse erstreckenden Aufnahmeraum für das Sägeseil sowie jeweils einen sich entlang der axialen Längserstreckung erstreckenden Öffnungsspalt aufweisen. Die Abdeckelemente können in einem Raster von 90° verdreht zueinander angeordnet werden. Mittels einer flexibel gestalteten Anordnung der Abdeckelemente an den Umlenkrollen werden weitere Winkelversätze der Abdeckelemente bezüglich der Ausrichtung der Umlenkrollen gewährleistet. Nachteilig an der bekannten Lösung ist, dass die Abdeckelemente nur in einem 90°-Raster zueinander angeordnet werden können und für die Abdeckung weiterer Winkelversätze speziell ausgebildete, aufwändig konstruierte Anordnungen erforderlich sind.

Aus der WO 1996/033058 A ist eine Schutzeinrichtung einer Seilsägevorrichtung mit zumindest zwei teleskopartig zusammenschiebbaren Abdeckelementen, die jeweils einen sich entlang einer Längsachse erstreckenden Aufnahmeraum für das Sägeseil aufweisen, bekannt. Die Abdeckelemente sind als Rohrelemente ausgebildet und weisen an einem Ende eine Festlegeeinrichtung zur Festlegung der Abdeckelemente an einer Umlenkrolle auf. Der Oberbegriff von Anspruch 1 basiert auf diesem Dokument.

Nachteilig an der bekannten Lösung ist, dass die Schutzeinrichtung nicht nachträglich auf dem Sägeseil angebracht werden kann.

Aufgabe der Erfindung ist es, eine Schutzeinrichtung für eine Seilsägevorrichtung zu schaffen, die nachträglich und einfach an den frei geführten Abschnitten des Sägeseils angeordnet werden kann, wobei die Ausrichtung benachbarter Umlenkrollen zueinander frei wählbar ist.

Die Aufgabe ist durch die Merkmale des unabhängigen Anspruchs gelöst. Vorteilhafte Weiterbildungen sind in den Unteransprüchen dargelegt.

Gemäss der Erfindung weisen alle Rohrelemente einen kreisförmigen Querschnitt und die Abdeckelemente jeweils einen sich entlang der axialen Längserstreckung erstreckenden Öffnungsspalt auf.

Zur Montage der Schutzeinrichtung nach dem Aufbau der Seilsägevonichtung werden die teleskopartig zusammenschiebbaren Abdeckelemente derart zueinander verdreht ausgerichtet, dass deren Öffnungsspalte in einer Linie liegen. Dann werden die Abdeckelemente über das Sägeseil gestülpt und mittels der Festlegeeinrichtungen jeweils an den benachbarten Umlenkrollen festgelegt, so dass das Sägeseil im frei geführten Bereich von den Abdeckelementen umgeben ist. Die Festlegeeinrichtungen sind an dem freien Ende des Rohrelementes angeordnet, das dem Ende des Rohrelementes gegenüberliegt, welches teleskopartig mit dem anderen Rohrelement zusammenwirkt. Aufgrund der hohlzylindrischen Ausbildung der Abdeckelemente sind diese um 360° zueinander verdrehbar, so dass diese an jeder beliebigen Ausrichtung der Umlenkrollen zueinander festlegbar sind und eine weitgehend vollständige Abdeckung des entsprechenden freien Seilabschnitts gewährleisten. Tritt beispielsweise beim Sägevorgang ein Seilriss auf, so behindern die Abdeckelemente das Peitschen des gerissenen Sägeseils im abgedeckten Bereich.

Bevorzugt umfasst die Festlegeeinrichtung zumindest einen Schenkel, der in einem Endbereich seines freien Endes eine Durchführöffnung für ein Befestigungsmittel zur Befestigung der Abdeckelemente an der Umlenkrolle aufweist. Die Befestigung erfolgt beispielsweise an der Rollenachse der Umlenkrollen oder an einer Schutzabdeckung der Umlenkrollen, welche die Umlenkrollen bereichsweise umgibt. Die Festlegeeinrichtung gewährt eine einfache Befestigung der Abdeckelemente an den Umlenkrollen, wobei die Abdeckelemente nach dem Stülpen über das Sägeseil automatisch zueinander verdreht werden.

Vorzugsweise umfasst die Festlegeeinrichtung zwei Schenkel zum zumindest bereichsweisen Umgreifen der Umlenkrollen, wobei die Schenkel jeweils im Endbereich ihrer freien Enden Durchführöffnungen für das Befestigungsmittel zur Befestigung der Abdeckelemente an den Umlenkrollen aufweisen. Die Schenkel verlaufen vorteilhaft parallel zueinander, so dass die Umlenkrolle gabelförmig umfasst wird. Weiter vorteilhaft erfolgt die Befestigung der Abdeckelemente an der Rollenachse der Umlenkrollen.

Die Erfindung wird nachstehend anhand eines Ausführungsbeispieles näher erläutert. Es zeigen:
- Fig. 1: Eine Seilsägevorrichtung mit zwei angeordneten Schutzeinrichtungen mit jeweils zwei Abdeckelementen;
- Fig. 2: eine vergrösserte Ansicht einer Schutzeinrichtung; und
- Fig. 2a: einen vergrösserten Querschnitt in Ebene IIa-IIa in Fig. 2.

Grundsätzlich sind in den Figuren gleiche Teile mit den gleichen Bezugszeichen versehen.

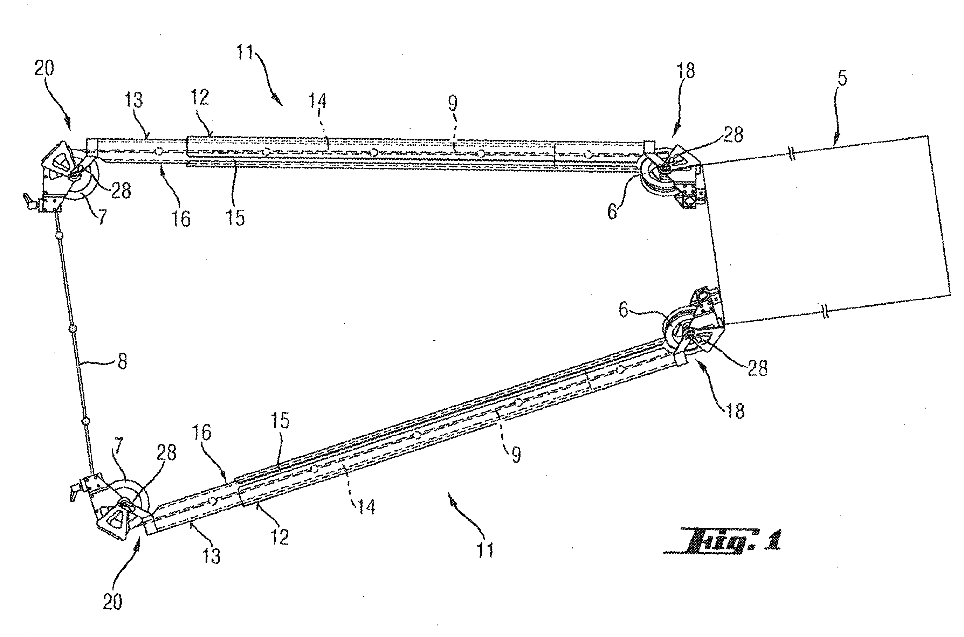

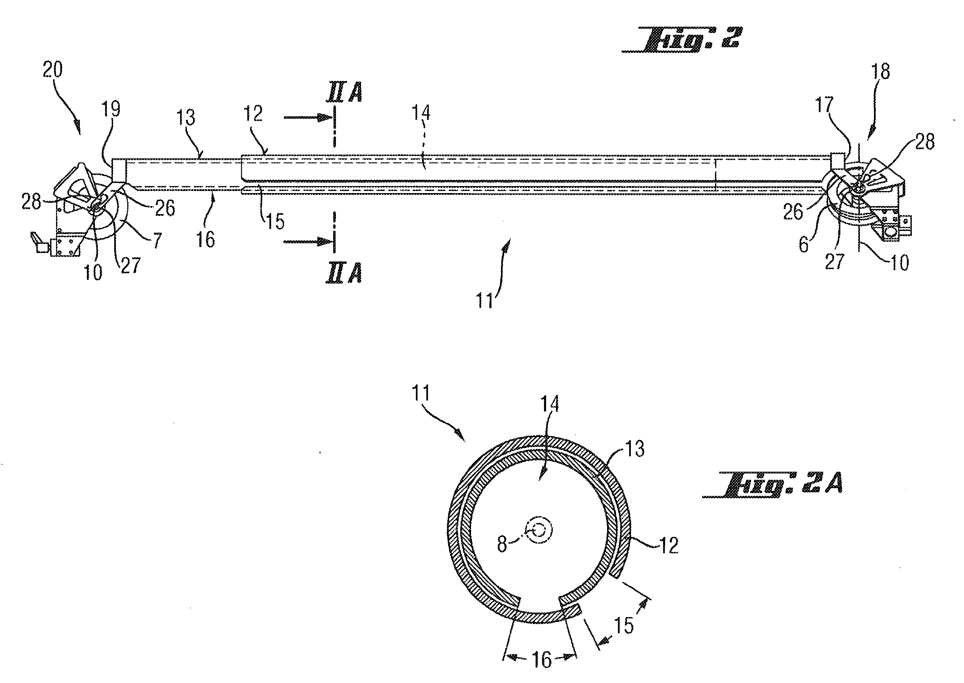

In den Figuren 1 und 2 ist eine Seilsägevorrichtung 5 mit zwei geräteseitigen Umlenkrollen 6 und zwei dazu benachbarten Umlenkrollen 7 gezeigt, um welche ein mit Schneidkörpern besetztes und von einer Motoranordnung der Seilsägevorrichtung 5 angetriebenes Sägeseil 8 geführt ist. Die dazwischen frei geführten Seilabschnitte 9 sind jeweils mit einer Schutzeinrichtung 11 versehen, die jeweils zwei teleskopartig zusammenschiebbare Abdeckelemente 12 und 13 umfasst, die jeweils einen sich entlang einer Längsachse erstreckenden Aufnahmeraum 14 für das Sägeseil 8 sowie jeweils einen sich entlang der axialen Längserstreckung erstreckenden Öffnungsspalt 15 und 16 zur nachträglichen Montage der Schutzeinrichtung 11 an der Seilsägevorrichtung 5 aufweisen. Die Abdeckelemente 12 und 13 sind Rohrelemente mit einem kreisförmigen Querschnitt, die jeweils an ihren freien Enden 17 bzw. 19 eine Festlegeeinrichtung 18 bzw. 20 zur Festlegung der Abdeckelemente 12 und 13 an einer der Umlenkrollen 6 bzw. 7 der Seilsägevorrichtung 5 aufweisen.

Die Festlegeeinrichtungen 18 und 20 sind im Wesentlichen gleich ausgebildet und umfassen jeweils zwei parallel zueinander verlaufende Schenkel 26 zum zumindest bereichsweisen Umgreifen der Umlenkrollen 6 bzw. 7. Die Schenkel 26 weisen im Endbereich ihrer freien Enden Durchführöffnungen 27 für ein Befestigungsmittel 28 zur Befestigung der Abdeckelemente 12 und 13 an der Rollenachse 10 der Umlenkrollen 6 bzw. 7 auf. Das Befestigungsmittel 28 ist beispielsweise ein Splint mit Sicherungsklammer, der zum Festlegen der Abdeckelemente 12 und 13 durch die hohle Rollenachse 10 der Umlenkrollen 6 bzw. 7 hindurchgeführt wird.

## Patentansprüche

1. Schutzeinrichtung für eine Seilsägevorrichtung (5) mit zumindest zwei teleskopartig zusammenschiebbaren Abdeckelementen (12, 13), die jeweils einen sich entlang einer Längsachse erstreckenden Aufnahmeraum (14) für das Sägeseil (8) sowie jeweils an einem Ende (17, 19) eine Festlegeeinrichtung (18, 20) zur Festlegung der Abdeckelemente (12, 13) an einer der Umlenkrollen (6, 7) der Seilsägevorrichtung (5) aufweisen, wobei die Abdeckelemente (12, 13) Rohrelemente sind, **dadurch gekennzeichnet, dass**
alle Rohrelemente einen kreisförmigen Querschnitt aufweisen und die Abdeckelemente (12, 13) jeweils einen sich entlang der axialen Längserstreckung erstreckenden Öffnungsspalt (15, 16) aufweisen.

2. Schutzeinrichtung nach Anspruch 1, **dadurch gekennzeichnet, dass** die Festlegeeinrichtung (18, 20) zumindest einen Schenkel (26) umfasst, der in einem Endbereich seines freien Endes eine Durchführöffnung (27) für ein Befestigungsmittel (28) zur Befestigung der Abdeckelemente (12, 13) an der Umlenkrolle (6, 7) aufweist.

3. Schutzeinrichtung nach Anspruch 2, **dadurch gekennzeichnet, dass** die Festlegeeinrichtung (18, 20) zwei Schenkel (26) zum zumindest bereichsweisen Umgreifen der Umlenkrollen (6, 7) umfasst, wobei die Schenkel (26) im Endbereich ihrer freien Enden Durchführöffnungen (27) für das Befestigungsmittel (28) zur Befestigung der Abdeckelemente (12, 13) an den Umlenkrollen (6, 7) aufweisen.

## Claims

1. Protective device for a wire saw device (5) comprising at least two telescoping cover elements (12, 13), each of which has a respective receptacle (14) for the sawing wire (8) extending along a longitudinal axis, and has a respective fixing device (18, 20) at a respective end (17, 19) for fixing the cover elements (12, 13) to one of the deflection pulleys (6, 7) of the wire saw device (5), the cover elements (12, 13) being tubular elements,
**characterised in that**
all the tubular elements have a circular cross section and the cover elements (12, 13) each have a respective opening gap (15, 16) extending along their axial longitudinal extent.

2. Protective device according to Claim 1, **characterised in that** the fixing device (18, 20) includes at least one bracket (26) which has in an end region of its free end an opening (27) through which a fastening means (28) can pass in order to fasten the cover elements (12, 13) to the deflection pulley (6, 7).

3. Protective device according to Claim 2, **characterised in that** the fixing device (18, 20) has two brackets (26) for extending at least zonally around the deflection pulleys (6, 7), the brackets (26) having in the end region of their free end openings (27) through which the fastening means (28) can pass in order to fasten the cover elements (12, 13) to the deflection pulleys (6, 7).

## Revendications

1. Dispositif de protection pour un dispositif de scie à fil (5) ayant au moins deux éléments de carter (12, 13) qui peuvent se déplacer conjointement de manière télescopique, lesquels éléments de carter comportent chacun un espace de réception (14) s'étendant le long d'un axe longitudinal pour le fil de scie (8) ainsi qu'un dispositif de fixation (18, 20), respectivement, sur une extrémité (17, 19) afin de fixer les éléments de carter (12, 13) sur l'une des poulies de renvoi (6, 7) du dispositif de scie à fil (5), les éléments de carter (12, 13) étant des éléments tubulaires, **caractérisé en ce que** tous les éléments tubulaires ont une section transversale circulaire et les éléments de carter (12, 13) comportent chacun une fente d'ouverture (15, 16) s'étendant le long de l'extension longitudinale axiale.

2. Dispositif de protection selon la revendication 1, **caractérisé en ce que** le dispositif de fixation (18, 20) comporte au moins une branche (26), laquelle comporte, dans une zone d'extrémité de son extrémité libre, une ouverture traversante (27) pour un élément de fixation (28) afin de fixer les éléments de carter (12, 13) sur la poulie de renvoi (6, 7).

3. Dispositif de protection selon la revendication 2, **caractérisé en ce que** le dispositif de fixation (18, 20) comporte deux branches (26) pour envelopper au moins certaines zones des poulies de renvoi (6, 7), dans lequel les branches (26), dans la zone d'extrémité de leurs extrémités libres, comporta des ouvertures traversantes (27) pour l'élément de fixation (28) afin de fixer les éléments de carter (12, 13) sur les poulies de renvoi (6, 7).
